# EUROPEAN PATENT SPECIFICATION

(11) **EP 4 227 937 B1**
(45) Date of publication and mention of the grant of the patent: **05.06.2024**
(21) Application number: 22214563.3
(22) Date of filing: 19.12.2022
(51) Int. Cl.: G10K 9/22

(54) **ACOUSTIC VEHICLE ALERTING SYSTEM**
AKUSTISCHES FAHRZEUGWARNSYSTEM
SYSTÈME ACOUSTIQUE D'ALERTE DE VÉHICULE

(30) Priority: 15.02.2022 IT 202200002762
(43) Date of publication of application: 16.08.2023
(73) Proprietor: Faital S.p.A., 20097 San Donato Milanese (MI) (IT)
(72) Inventor: LANATI, Paolo, 20097 San Donato Milanese MI (IT); VALDES, Silvio, 20097 San Donato Milanese MI (IT)
(74) Representative: Rondano, Davide

(56) References cited:
- US-A- 4 138 593
- US-A1- 2006 045 300
- US-A1- 2017 180 837
- US-A1- 2019 111 840

## Description

### Technical field of the invention

The present invention relates to an acoustic vehicle alerting system, that is to say, a system intended to be installed on a vehicle, in particular an electric vehicle or a hybrid vehicle, i.e. a vehicle that can be driven in purely electric mode without the use of the internal combustion engine, and designed to emit acoustic warning signals for alerting pedestrians to the presence of the vehicle.

### State of the art

Electric vehicles, as well as hybrid vehicles driving in electric mode, are very difficult to hear when driving at low speed. This may have a negative impact on pedestrian safety. Therefore, European legislation has imposed since 2014 a minimum noise level for electric and hybrid vehicles. In order to meet this requirements, acoustic vehicle alerting systems (also known with the acronym AVAS) have been developed, which are designed to emit acoustic warning signals to alert pedestrians to the presence of electric vehicles.

An acoustic vehicle alerting system typically comprises a loudspeaker received in a small casing made of a front part and a rear part, so that the front radiation emitted by the speaker is separated from the rear one. It is thus possible to avoid an acoustic short circuit, thereby allowing to reproduce warning sounds at low frequency.

As it is known, a loudspeaker basically includes a lightweight diaphragm, or cone, a rigid basket, or frame, a voice coil and a magnetic circuit. The cone is connected at its top end (wider end) to an upper portion of the frame via a first flexible suspension member, typically called "surround", and at its bottom end (narrower end) to a support member, typically called "former", supporting the voice coil. Furthermore, the former is connected to a lower portion of the frame via a second flexible suspension member, typically called "spider". The voice coil is constrained, by virtue of the connection of the cone and of the former with the frame via the above-mentioned first and second flexible suspension members, respectively, to move axially through a cylindrical air gap of the magnetic circuit. When an electrical current is applied to the voice coil, the interaction between the electric current in the voice coil and the magnetic field in the air gap generates a mechanical force that moves the voice coil axially through the air gap and, thus, the former and the cone attached thereto. Application of alternating electric current in the voice coil under control of an amplifier causes therefore the cone to move back and forth, thereby reproducing sound.

An acoustic vehicle alerting system according to the preamble of independent claim 1 is disclosed in US 2017/180837.

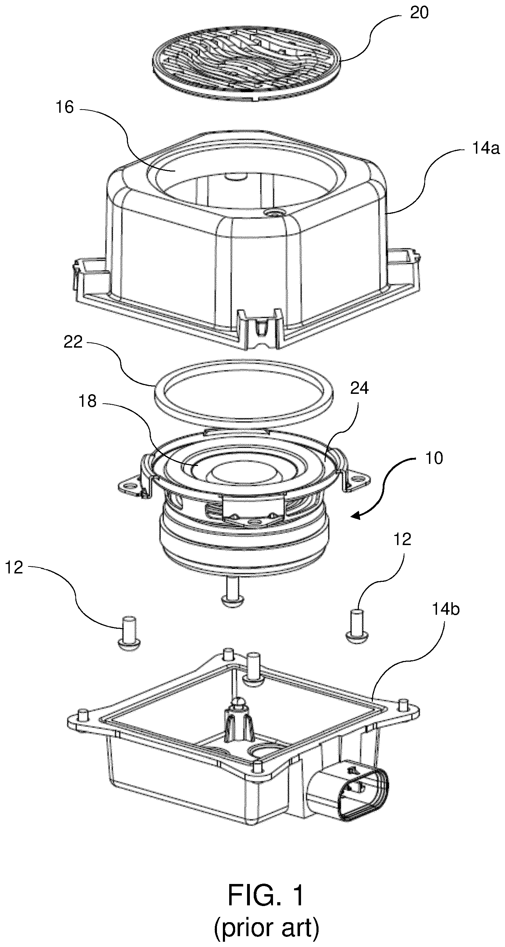

With reference to Figure 1 of the attached drawings, in a typical acoustic vehicle alerting system the loudspeaker 10 is connected by means of screw/rivets 12 to a front part 14a of a casing, which front part 14a is connected in turn to a rear part 14b of the casing. The front part 14a of the casing has an opening 16 facing a cone 18 of the loudspeaker 10. A grille 20 is mounted on the front part 14a of the casing to protect the opening 16. A gasket 22 is interposed between a surround 24 of the loudspeaker 10 and the front part 14a of the casing to prevent external agents from entering inside the loudspeaker 10 and the associated electronic parts contained in the casing.

European legislation imposes a minimum level of efficiency for the acoustic vehicle alerting systems, while customers (i.e. the car makers) require more and more compact systems at limited costs.

The efficiency of the loudspeaker depends on the mechanical force that moves the voice coil (which force is directly proportional to the magnetic field through the air gap), the mass of the moving parts and the so-called effective radiation area. For woofers (i.e. loudspeakers reproducing low mid frequencies) the effective radiation area may be approximated using the diameter of half speaker surround. Increasing the mechanical force that moves the voice coil and decreasing the mass of the moving parts in order to maximize the efficiency may introduce issues related to costs, sizes and mechanical instability. Hence, the most effective way to maximize the efficiency is to maximize the effective radiation area. However, the effective radiation area is limited by the need to provide enough space for the screw/rivets 12 for connecting the front part 14a and the rear part 14b of the casing with each other.

Furthermore, the typical architecture of the known acoustic vehicle alerting systems does not completely avoid the risk that external agent may enter the loudspeaker 10 passing through the connection interface between the front part 14a of the casing and the loudspeaker 10. This is particularly critical, considering that the acoustic vehicle alerting systems are placed in a hostile environment like the engine compartment of the vehicle, and are therefore largely exposed to external agents such as water, mud, dust, chemicals, etc.

### Summary of the invention

It is an object of the present invention to overcome at least one of the aforementioned disadvantages of the prior art.

In particular, it is an object of the present invention to provide an acoustic vehicle alerting system which has a higher efficiency than the prior art, the size of the casing remaining unchanged, and/or which ensures a higher degree of protection from external agents than the prior art, and/or which is easier and less expensive to manufacture than the prior art.

This and other objects are fully achieved according to the present invention by virtue of an acoustic vehicle alerting system having the features defined in independent claim 1. Further advantageous features of the invention are defined in the dependent claims, whose subject-matter is intended to form an integral part of the following description. Since the front part of the casing and the frame of the loudspeaker are made as one single piece, the acoustic vehicle alerting system of the invention does not require connection means, such as screws or rivets, as well as sealing means, such as a gasket, which are on the other hand required in the acoustic vehicle alerting systems of the prior art to ensure proper connection between the front part of the casing and the frame of the loudspeaker. Providing a single piece that integrally forms the front part of the casing and the frame of the loudspeaker allows to obtain at least the following advantageous effects.

The efficiency of the system is increased, as the maximum effective radiation area that can be obtained is wider than the prior art, the size (i.e. the external total dimensions) of the casing remaining unchanged. In fact, since no connection means such as screws or rivets are required any longer, there is more space available for the cone of the loudspeaker, which cone can thus have a larger diameter.

Additionally, since the front part of the casing and the frame of the loudspeaker are not made as separate pieces, as in the prior art, but integrally formed with each other, the protection from external agents is greatly improved.

Moreover, the total number of pieces of the system is reduced, as the screws/rivets and the gasket are dispensed with. Therefore, the assembly of the system becomes easier and quicker and the manufacturing costs are reduced.

Further characteristics and advantages of the present invention will be evident to those skilled in the art from the following detailed description, given purely by way of nonlimiting example.

### Brief description of the drawings

In the following detailed description reference will be made to the appended drawings, where:
- Figure 1 is an exploded view of an acoustic vehicle alerting system according to the prior art;
- Figure 2 is a perspective view of an acoustic vehicle alerting system according to an embodiment of the present invention;
- Figure 3 is an exploded view of the acoustic vehicle alerting system of Figure 2; and
- Figure 4 is a section view of the assembly formed by the front part of the casing and the loudspeaker of the acoustic vehicle alerting system of Figure 2.

### Detailed description

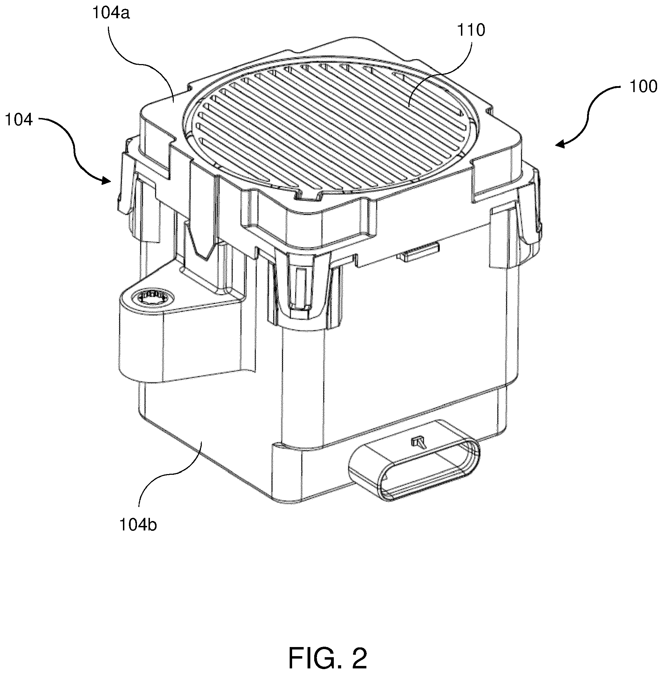

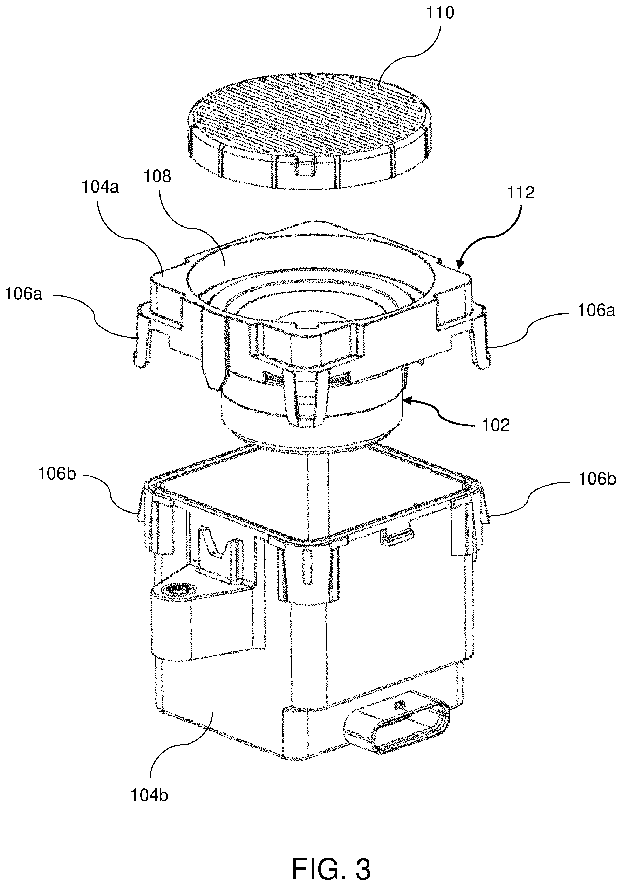

With reference first to Figures 2 and 3, an acoustic vehicle alerting system (hereinafter simply referred to as "system") according to an embodiment of the present invention is generally indicated 100.

The system 100 basically comprises a loudspeaker 102 and a casing 104 in which the loudspeaker 102 is received.

The casing 104 comprises a front part 104a and a rear part 104b. The front part 104a and the rear part 104b are provided with respective mechanical coupling means 106a and 106b, such as for example snap-coupling means, arranged to engage with each other for connection of these two parts. In addition to said mechanical coupling means, the front part 104a and the rear part 104b may also be coupled to each other by means of glue to ensure a waterproof connection between these two parts. The front part 104a has an opening 108 facing the loudspeaker 102 and a grille 110 is mounted on the front part 104a to protect the opening 108. As explained in greater detail here below, the loudspeaker 102 and the front part 104a form a front assembly 112 that can be handled as a single piece.

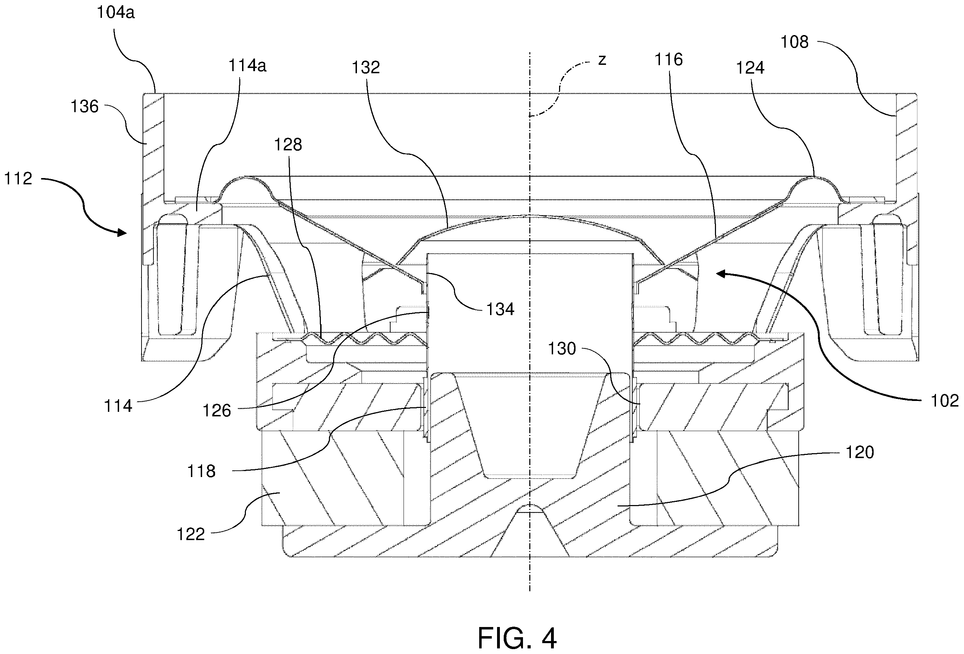

With reference now to Figure 4, the loudspeaker 102 basically includes, in a per-se-known manner, a rigid basket or frame 114 (hereinafter referred to as "frame 114"), a lightweight diaphragm or cone 116 (hereinafter referred to as "cone 116"), a voice coil 118, and a magnetic circuit formed by a piece 120 of ferromagnetic material on which one or more permanent magnets 122 (in present case, a single permanent magnet with an annular shape) are mounted. The cone 116 is connected at its top end (wider end) to the frame 114, in particular to an upper portion 114a of the latter, via a first flexible suspension member 124 (typically known as "surround" and, therefore, hereinafter referred to with this term), and at its bottom end (narrower end) to a support member 126 (typically known as "former" and, therefore, hereinafter referred to with this term), in particular a tubular member, supporting the voice coil 118. Furthermore, the former 126 is connected to the frame 114, in particular to a lower portion of the latter, via a second flexible suspension member 128 (typically known as "spider" and, therefore, hereinafter referred to with this term).The voice coil 118 is thus constrained, by virtue of the connection of the cone 116 and of the former 126 with the frame 114 via the surround 124 and the spider 128, respectively, to move axially (i.e. along the direction of an axis z substantially coinciding with the geometric axis of the cone 116) through a cylindrical air gap 130 formed by the piece 120 of ferromagnetic material. When an electrical current is applied to the voice coil 118, the interaction between the electric current in the voice coil 118 and the magnetic field in the air gap 130 generates a mechanical force that moves the voice coil 118 axially through the air gap 130 and, thus, the former 126 and the cone 116 attached thereto. Application of alternating electric current in the voice coil 118 under control of an amplifier (not shown, but of per-se-known type) causes therefore the cone 116 to move back and forth, thereby reproducing sound.

In a per-se-known manner, the loudspeaker 102 further comprises a dust cap 132 which covers a central hole 134 of the former 126 to protect the underlying region of the loudspeaker 102 where the voice coil 118 and the air gap 130 are placed. According to the invention, the front part 104a of the casing 104 and the frame 114 of the loudspeaker 102 are made integrally with each other to form one single piece, as clearly shown in Figure 4. In particular, the upper portion 114a of the frame 114 of the loudspeaker 102 has an annular shape lying in a horizontal plane (or, more generally, a plane perpendicular to the axis z), and is integrally joined to a cylindrical inner wall 136 of the front part 104a of the casing 104 surrounding the opening 108. The upper portion 114a of the frame 114 of the loudspeaker 102 provides a mounting surface for attachment (for example, by means of glue) of the surround 124 to the frame 114.

In view of the above description, the advantages that can be obtained with a system according to the invention are evident.

First of all, the efficiency of the system is increased, as the maximum effective radiation area that can be obtained is wider than the prior art, the size (i.e. the external total dimensions) of the casing remaining unchanged. Considering for example that the casing has an external size of 70x70 mm (typical size on the reference market), the maximum available area is 49 cm². With a standard configuration of the system, assuming that the loudspeaker has, in plan view, a round shape, the effective radiation area S_{d} of the loudspeaker is generally not more than 16,5 cm², thus using around 34% of the maximum available area. The proposed system has (with the same external size of the casing) an effective radiation area S_{d} of about 23 cm², thus using about 47% of the maximum available area. This leads to an improvement of about 2,8 dB in the efficiency of the system, assuming that all other parameters be the same. Moreover, the integration of frame of the loudspeaker and the front part of the casing into a single piece guarantees a total protection from external agents (water, dust, mud, chemicals, etc.) and reduces the total number of components, thereby making the manufacturing process of the system easier and less expensive.

The present invention has been disclosed herein with reference to a preferred embodiment thereof. It is however clear that other embodiments may be provided for, which share with the one disclosed herein the same inventive idea, as defined by the appended claims.

For example, even though the invention has been disclosed with reference to a system including a loudspeaker of round shape, which is typically the best compromise between mechanical stability and performance, such a shape is not essential and therefore the loudspeaker may have any other suitable shape.

Moreover, even though the loudspeaker disclosed herein comprises a diaphragm of conical shape, any other suitable shape may be chosen.

## Claims

1. Acoustic vehicle alerting system (100) comprising a loudspeaker (102) and a casing (104) in which the loudspeaker (102) is received,
wherein the loudspeaker (102) comprises a frame (114), a cone (116) and a first flexible connection member (124) connecting a top end of the cone (116) to the frame (114), and
wherein the casing (104) comprises a front part (104a) and a rear part (104b) connected to each other, said front part (104a) having an opening (108) facing the cone (116) of the loudspeaker (102),
**characterized**
**in that** the front part (104a) of the casing (104) and the frame (114) of the loudspeaker (102) are made integrally with each other to form one single piece, and
**in that** the frame (114) of the loudspeaker (102) comprises an upper portion (114a) lying in a plane substantially perpendicular to a geometric axis (z) of the cone (116) of the loudspeaker (102), wherein said upper portion (114a) provides a mounting surface to which said first flexible connection member (124) is attached, and wherein said upper portion (114a) integrally joins a cylindrical inner wall (136) of the front part (104a) of the casing (104) surrounding the opening (108).

2. System according to claim 1, wherein the front part (104a) and the rear part (104b) of the casing (104) are provided with respective mechanical coupling means (106a, 106b) engaging with each other for releasable connection of said parts (104a, 104b).

3. System according to claim 2, wherein said coupling means (106a, 106b) are snap-coupling means.

4. System according to claim 2 or claim 3, wherein the front part (104a) and the rear part (104b) of the casing (104) are also connected to each other by means of glue.

## Patentansprüche

1. Akustisches Fahrzeugwarnsystem (100), umfassend einen Lautsprecher (102) und ein Gehäuse (104), in dem der Lautsprecher (102) aufgenommen ist,
wobei der Lautsprecher (102) einen Rahmen (114), eine Membran (116) und ein erstes flexibles Verbindungselement (124) umfasst, das ein oberes Ende der Membran (116) mit dem Rahmen (114) verbindet, und
wobei das Gehäuse (104) einen vorderen Teil (104a) und einen hinteren Teil (104b) umfasst, die miteinander verbunden sind, wobei der vordere Teil (104a) eine Öffnung (108) aufweist, die der Membran (116) des Lautsprechers (102) zugewandt ist,
**dadurch gekennzeichnet dass**
der vordere Teil (104a) des Gehäuses (104) und der Rahmen (114) des Lautsprechers (102) einstückig miteinander hergestellt sind, um ein einziges Stück auszubilden, und
**dass** der Rahmen (114) des Lautsprechers (102) einen oberen Abschnitt (114a) umfasst, der in einer Ebene liegt, die im Wesentlichen senkrecht zu einer geometrischen Achse (z) der Membran (116) des Lautsprechers (102) ist, wobei der obere Abschnitt (114a) eine Montageoberfläche bereitstellt, an der das erste flexible Verbindungselement (124) angebracht ist, und wobei der obere Abschnitt (114a) mit einer zylindrischen Innenwand (136) des vorderen Teils (104a) des Gehäuses (104) einstückig verbunden ist, die die Öffnung (108) umgibt.

2. System nach Anspruch 1, wobei der vordere Teil (104a) und der hintere Teil (104b) des Gehäuses (104) mit entsprechenden mechanischen Kopplungsmitteln (106a, 106b) versehen sind, die miteinander in Eingriff stehen, für eine lösbare Verbindung der Teile (104a, 104b).

3. System nach Anspruch 2, wobei die Kopplungsmittel (106a, 106b) Schnappkopplungsmittel sind.

4. System nach Anspruch 2 oder 3, wobei der vordere Teil (104a) und der hintere Teil (104b) des Gehäuses (104) ebenso mittels Klebstoff miteinander verbunden sind.

## Revendications

1. Système acoustique d'alerte de véhicule (100) comprenant un haut-parleur (102) et un boîtier (104) dans lequel le haut-parleur (102) est reçu,
dans lequel le haut-parleur (102) comprend un cadre (114), un cône (116) et un premier élément de raccord flexible (124) raccordant une extrémité supérieure du cône (116) au cadre (114), et
dans lequel le boîtier (104) comprend une partie avant (104a) et une partie arrière (104b) raccordées l'une à l'autre, ladite partie avant (104a) ayant une ouverture (108) faisant face vers le cône (116) du haut-parleur (102),
**caractérisé**
**en ce que** la partie avant (104a) du boîtier (104) et le cadre (114) du haut-parleur (102) sont fabriqués intégralement l'un avec l'autre pour former une seule pièce, et
**en ce que** le cadre (114) du haut-parleur (102) comprend une partie supérieure (114a) reposant dans un plan sensiblement perpendiculaire à un axe géométrique (z) du cône (116) du haut-parleur (102), dans lequel ladite partie supérieure (114a) fournit une surface de montage à laquelle ledit premier élément de raccord flexible (124) est fixé, et dans lequel ladite partie supérieure (114a) rejoint intégralement une paroi interne cylindrique (136) de la partie avant (104a) du boîtier (104) entourant l'ouverture (108).

2. Système selon la revendication 1, dans lequel la partie avant (104a) et la partie arrière (104b) du boîtier (104) sont pourvues de moyens d'accouplement mécanique respectifs (106a, 106b) venant en prise l'un avec l'autre pour un raccord amovible desdites parties (104a, 104b).

3. Système selon la revendication 2, dans lequel lesdits moyens d'accouplement (106a, 106b) sont des moyens d'accouplement à déclic.

4. Système selon la revendication 2 ou la revendication 3, dans lequel la partie avant (104a) et la partie arrière (104b) du boîtier (104) sont également raccordées l'une à l'autre au moyen de colle.
